# EUROPEAN PATENT SPECIFICATION

(11) **EP 3 563 721 B1**
(45) Date of publication and mention of the grant of the patent: **24.09.2025**
(21) Application number: 19172363.4
(22) Date of filing: 02.05.2019
(51) Int. Cl.: A47B 47/02, A47B 96/02, A47B 96/14, B65G 1/02, A47F 5/01, A47B 55/02

(54) **STORAGE FURNITURE**
AUFBEWAHRUNGSMÖBEL
MEUBLE DE STOCKAGE

(30) Priority: 03.05.2018 NL 2020875
(43) Date of publication of application: 06.11.2019
(73) Proprietor: Hitmetal B.V., 5741 SJ Beek en Donk (NL)
(72) Inventor: Schaafsma, Peter Sybrandus Michel, 5627 HM Eindhoven (NL)
(74) Representative: Nederlandsch Octrooibureau

(56) References cited:
- EP-A1- 2 085 332
- EP-A1- 2 253 245
- EP-A1- 3 372 531

## Description

### Field of the invention

The present invention relates to a storage furniture.

### Background art

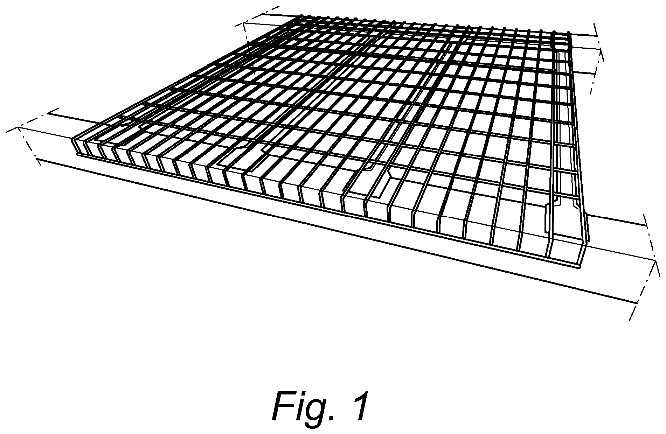

Figure 1 shows a conventional storage furniture, for example, stocking room shelves comprising a shelf panel that can be a metal mesh or grid, and a support bar below the grid supporting the grid. In use, the shelf is rested on a shelving frame that comprises at least two cross beams supporting the shelf. To minimize movement of the shelf once the shelf is placed on the shelving frame, the grid needs to be bent downwards at the two opposite edges of the grid so the bent parts of the grid embrace a profile of the cross beams. Also the support bar needs to be connected (usually welded) to the grid. The support bar is for preventing extensive deformation of the grid when objects are placed on the shelf.

EP2253245 discloses a profile for shelving reinforcement meshes designed for bearing palletized loads comprising a grooved body provided to withstand a mesh element), and including flat opposed ends to rest on two crossbeam integral with the structure of the shelf , wherein the profile includes fitting means to detachably fix the mesh element. As a result a profile is obtained that permits to adapt the reinforcement mesh according to the loads to be withstood efficiently and with a lower product cost. This document discloses a shelf for a storage furniture comprising a frame comprising a structure of at least two beams, the shelf comprising a support element, and a panel, wherein the panel is a grid panel comprising a first set of rods which are parallel to each other, and a second set of rods which are parallel to each other, wherein the first set of rods is perpendicular to the second set of rods, wherein the outermost rods of the second set of rods form two opposite edges of the grid; wherein, when the shelf is in use, the support element is detachably connected between the beams for supporting the panel, wherein the support element comprises: an elongated body for supporting the panel; a first fitting element at a first end of the elongated body configured to detachably fix to the panel by inserting through a first hole of the panel, a second fitting element at a second end, opposite to the first end, of the elongated body configured to detachably fix to the panel by inserting through a second hole of the panel, the second fitting element comprising a first receiver for receiving the second edge of the panel; wherein the first fitting element comprises a second receiver and a bent part having an extension stretched along a direction out of the plane of the grid and the extension embraces at least partially a profile of one of the beams supporting the panel when in use.

EP2085332 discloses a shelf provide with two side units (12,14) that are arranged parallel to each other with an upper bearing surface and cross beams, wherein the different parts are stacked.

EP3372531 discloses a supporting structure for sliding rail that uses one or more identical modules, stacked longitudinally and supported on the beams of the conventional compact palletization facility, on which the tracks for the chains of the sliding rail are subsequently mounted, each of these modules comprising, in turn, a quadrangular mesh supported on several ribs that may be fixed or telescopic, and which has, on its upper part, supporting rods for the rails for the chain.

A problem of the conventional storage furniture and the corresponding support bar are the necessary process steps of bending the grid and welding the support bar to the grid.

There is therefore a need to provide storage furniture that is easier to be assembled with a shelf panel.

### Summary of the invention

The invention is summarized in the attached claims and further illustrated with the below examples.

### Short description of drawings

Embodiments of the present disclosure will be described hereinafter, by way of example only, with reference to the accompanying drawings which are schematic in nature and therefore not necessarily drawn to scale. Furthermore, like reference signs in the drawings relate to like elements.
Fig. 1 schematically shows a conventional storage furniture.
Fig. 2 schematically shows a support element according to an embodiment of the present disclosure.
Fig. 3 schematically shows a panel according to an embodiment of the present disclosure.
Fig. 4 schematically shows a storage furniture provided with panels according to an embodiment of the present disclosure.

### Description of embodiments

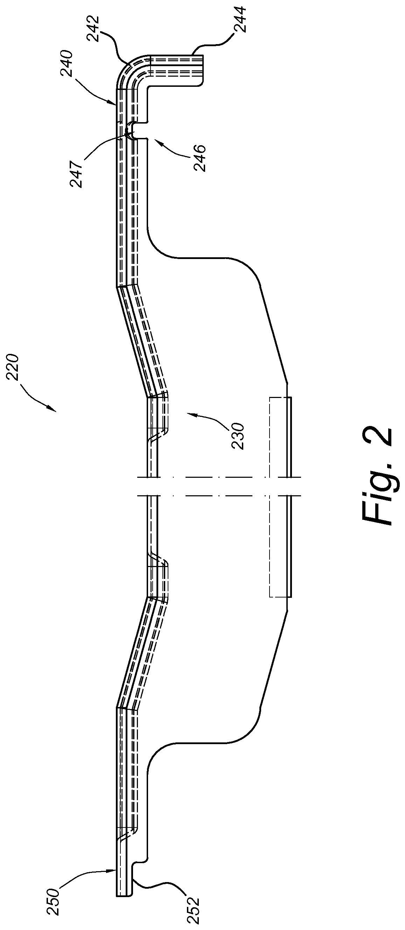

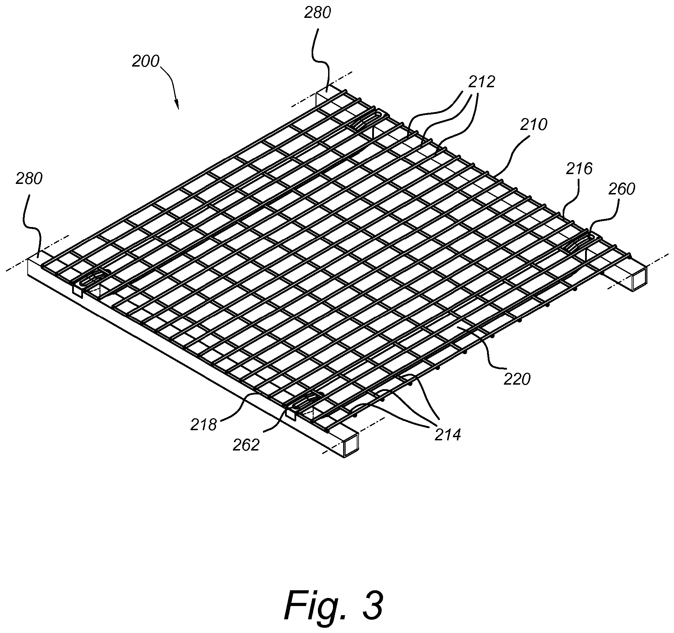

The embodiments of the present disclosure are described with relation to Figs 2-4. Figure 3 schematically shows a shelf for a storage furniture according to an embodiment of the present disclosure.

The shelf 200 comprises a panel 210 that can be a grid or a mesh and a support element 220. The grid 210 comprises a first set of rods 212 which rods are parallel to each other. The first set of rods 212 is perpendicular to a second set of rods 214 which rods are parallel to each other. The outermost rods form two opposite edges 216, 218 of the grid 210.

Fig. 2 shows a support element 220 according to an embodiment of the present disclosure. The support element 220 comprises an elongated body 230, a first fitting element 240 situated at a first end of the elongated body 230, and a second fitting element 250 situated at a second end, opposite to the first end, of the elongated body 230. The elongated body 230, first fitting element 240 and second fitting element 250 can be separate elements attachable to each other, or they can be formed in one piece.

The support element 220 is for preventing extensive deformation of the grid 210 when objects are placed on the shelf 200. The first fitting element 240 comprises a second receiver 246 for receiving the first edge 218 so that the support element 220 is more stably fixed to the mesh 210. The first receiver may comprise an aperture 247 matching the diameter of the rods. The first fitting element 240 comprises a bent part 242 and an extension 244 of the bent part 244. The second fitting element 250 comprising a first receiver 252 for receiving the second edge 216 for example once the first fitting element 240 is attached to the grid 210.

When in use, the first fitting element 240 is inserted through a spacing between the first set of rods. In particular, the first fitting element 240 is inserted through a first hole 262 of the mesh 210 next to the edge 218. The bent part 242 covers partially of the first edge 218 and is detachably fixed to the mesh 210. Fig. 2 shows that the bent part 242 is at an end of the support element 220. The extension 244 of the bent part 242 is stretched along a direction out of the plane of the mesh 210, preferably downwards when in use.

The second fitting element 250 is inserted through a second hole 260 of the mesh 210 next to the edge 216. Due to a certain flexibility of the support element 220, the first receiver 252 of the second fitting element 250 receives the second edge 216 so that the second fitting element 250 is detachably fixed to the mesh 210 and the support element is interlocked with the mesh.

The extension 244 embraces at least partially a profile of a beam or a cross beam 280 supporting the panel when in use. In this way, the shelf 200 is fixed to the cross beam 280 in the direction along the elongated body 230. The extension 244 embraces an outer edge, furthest from the centre of the panel 210, of the beam 280 supporting the panel 210 when in use.

Due to the certain flexibility of the support element 220, the support element 220 can be detached again from the mesh 210.

Furthermore, Fig. 2 shows that the support element 220 comprises a U-shaped profile seen in a plane perpendicular to the main axis of the support element 220. The first receiver 252 and the second receiver 246 comprise two side walls of the U-shaped profile stretched along a direction out of the plane of the panel, preferably downwards when in use. The two side walls together with a part connecting the two side walls provide that the panel is 210 fixed to the support element 220.

Optionally the first receiver 252 or/and the second receiver 246 can comprise a slot for receiving the edges 216, 218 of the panel 210. The distance between the first and second receiver of the support element is selected such that the support element is interlocked between the first and second holes of the panel. In an embodiment the first and second receiver can comprise respective slots 216,218 for receiving the respective edges at the sides of the mesh, wherein the length between the slots at the receiving ends of the support panel is selected such that the support element is interlocked between the holes of the panel.

Advantageously, the mesh 210 does not need to be bent at the two opposite edges of the panel because of the bent part of the support element, reducing a production step. Furthermore the support element 220 can be attached to the mesh 210 without welding to the mesh 210 or using any fixation element like a screw, nail etc. Because the support element 220 is detachable from the mesh 210, the shelf 200 is fully customizable depending on the purpose of the shelf 200. For example the user can choose a suitable grid with a desirable grid spacing, rod diameter, grid material, grid colour, and a suitable number of the support element per unit area of the grid depending on the desired loading capacity of the shelf. Moreover, when the grid 210 or the supporting element 220 is damaged, it can be separately replaced instead of replacing the entire shelf 200.

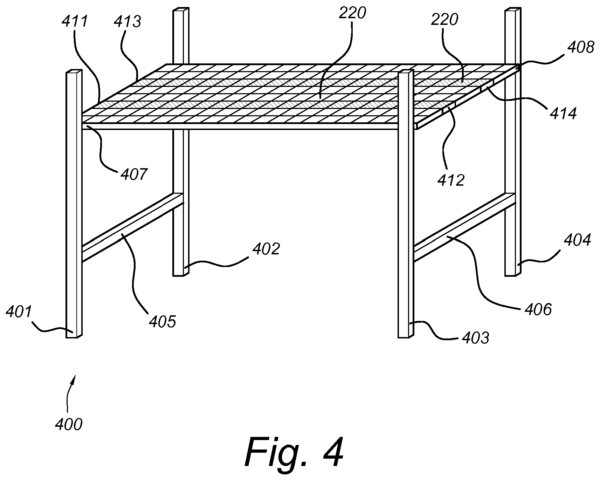

Fig. 4 shows a storage furniture according to an embodiment of the present disclosure.

The storage furniture 400 comprises a frame comprising multiple beams 401,402,403, 404. In this embodiment four beams 401,402,403,404 are placed upright at the corners of, for example, a rectangle. Furthermore, the storage furniture is further provided cross beams 405, 406, 407, 408 for connecting the beams at opposite short sides of the rectangle.

The panel is placed on horizontally on the cross beams 407, 408 of the storage furniture. The panel can be a grid or a plate provided with holes to pass the respective ends of the support element. The storage furniture is further provided with support elements 220 as described with respect to figure 2. The receiving ends of the support elements 220 can be connected to the grid or the plate via first holes 411,413 at a first side of the panel and second holes 412, 414 at the opposite end of the panel. Furthermore, the length between the receiving ends of the support element 220 is selected such that the support element is interlocked between the holes of the panel. In an embodiment wherein the plate is a grid provided with respective holes to detachably connect the receiving ends of the support element. Additionally, the panel can be vertically mounted to the cross beams 406,408.

The present invention has been described above with reference to a number of exemplary embodiments as shown in the drawings. Modifications and alternative implementations of some parts or elements are possible, as long as they are included in the scope of protection as defined in the appended claims.

In the foregoing description of the figures, the invention has been described with reference to specific embodiments thereof. It will, however, be evident that various modifications and changes may be made thereto without departing from the scope of the invention as summarized in the attached claims.

In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

It is to be understood that the invention is limited by the annexed claims. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. Shelf for a storage furniture comprising a frame comprising a structure of at least two beams (280), the shelf comprising a support element (220), and a panel (210),
wherein the panel (210) is a grid panel comprising a first set of rods (212) which are parallel to each other, and a second set of rods (214) which are parallel to each other, wherein the first set of rods (212) is perpendicular to the second set of rods (214), wherein the outermost rods of the second set of rods form two opposite edges (216, 218) of the grid;
wherein, when the shelf is in use, the support element (220) is detachably connected between the beams (280) for supporting the panel (210), wherein the support element (220) comprises:
an elongated body (230) for supporting the panel (210);
a first fitting element (240) at a first end of the elongated body (230) configured to detachably fix to the panel (210) by inserting through a first hole (262) of the panel,
a second fitting element (250) at a second end, opposite to the first end, of the elongated body configured to detachably fix to the panel by inserting through a second hole (260) of the panel, the second fitting element comprising a first receiver (252) for receiving the second edge (216) of the panel;
wherein the first fitting element comprises a second receiver (246) for receiving the first edge (218) of the panel and a bent part (242) having an extension (244) stretched along a direction out of the plane of the grid and the extension (244) embraces at least partially a profile of one of the beams supporting the panel when in use, wherein the bent part, when inserted through the first hole, partially covers the first edge and is thereby detachably fixed to the panel,
wherein the second fitting element, due to a certain flexibility of the support element and when inserted through the second hole, receives the second edge so that the second fitting element is detachably fixed to the panel and the support element is interlocked with the grid.

2. . The shelf according to claim 1, wherein the bent part (242) is at an end of the support element.

3. The shelf according to any of claims 1 - 2, wherein the support element comprises a U-shaped profile seen in a plane perpendicular to the main axis of the support element.

4. The shelf according to any of claims 1 - 3, wherein the first receiver (252) or/and the second receiver (246) comprises a side wall of the U-shaped profile stretched along a direction out of the plane of the panel, preferably downwards when in use.

5. The shelf according to any of claims 1 - 4, wherein at least a part of the support element is made of one of: galvanized metal, pre-galvanized metal, stainless steel, plastic.

6. Storage furniture comprising a shelf according to any of the claims 1-5.

## Patentansprüche

1. Regal für ein Lagermöbel, umfassend einen Rahmen, der eine Struktur von mindestens zwei Balken (280) umfasst, wobei das Regal ein Stützelement (220) und eine Platte (210) umfasst,
wobei die Platte (210) eine Gitterplatte ist, die einen ersten Satz von Stäben (212), die parallel zueinander sind, und einen zweiten Satz von Stäben (214), die parallel zueinander sind, umfasst,
wobei der erste Satz von Stäben (212) senkrecht zu dem zweiten Satz von Stäben (214) ist, wobei die äußersten Stäbe des zweiten Satzes von Stäben zwei gegenüberliegende Kanten (216, 218) des Gitters bilden;
wobei, wenn das Regal in Gebrauch ist, das Stützelement (220) lösbar zwischen den Balken (280) verbunden ist zum Stützen der Platte (210), wobei das Stützelement (220) umfasst:
einen länglichen Körper (230) zum Stützen der Platte (210);
ein erstes Befestigungselement (240) an einem ersten Ende des länglichen Körpers (230), das konfiguriert ist, um lösbar an der Platte (210) zu befestigen durch Einführen durch ein erstes Loch (262) der Platte,
ein zweites Befestigungselement (250) an einem zweiten Ende, gegenüber dem ersten Ende, des länglichen Körpers, das konfiguriert ist, um lösbar an der Platte zu befestigen durch Einführen durch ein zweites Loch (260) der Platte, wobei das zweite Befestigungselement eine erste Aufnahme (252) zum Aufnehmen der zweiten Kante (216) der Platte umfasst;
wobei das erste Befestigungselement eine zweite Aufnahme (246) zum Aufnehmen der ersten Kante (218) der Platte und einen gebogenen Teil (242) umfasst, der eine Verlängerung (244) aufweist, die entlang einer Richtung aus der Ebene des Gitters gestreckt ist, und die Verlängerung (244) mindestens teilweise ein Profil von einem der Balken umfasst, die die Platte stützen, wenn in Gebrauch, wobei der gebogene Teil, wenn durch das erste Loch eingeführt, teilweise die erste Kante bedeckt und dadurch lösbar an der Platte befestigt ist,
wobei das zweite Befestigungselement, aufgrund einer bestimmten Flexibilität des Stützelements und_wenn durch das zweite Loch eingeführt, die zweite Kante aufnimmt, so dass das zweite Befestigungselement lösbar an der Platte befestigt ist und das Stützelement mit dem Gitter verriegelt ist.

2. Regal nach Anspruch 1, wobei der gebogene Teil (242) an einem Ende des Stützelements ist.

3. Regal nach einem der Ansprüche 1 bis 2, wobei das Stützelement ein U-förmiges Profil umfasst, gesehen in einer Ebene senkrecht zu der Hauptachse des Stützelements.

4. Regal nach einem der Ansprüche 1 bis 3, wobei die erste Aufnahme (252) oder/und die zweite Aufnahme (246) eine Seitenwand des U-förmigen Profils umfasst, die entlang einer Richtung aus der Ebene der Platte gestreckt ist, vorzugsweise nach unten wenn in Gebrauch.

5. Regal nach einem der Ansprüche 1 bis 4, wobei mindestens ein Teil des Stützelements aus einem der folgenden hergestellt ist: verzinktes Metall, vorverzinktes Metall, rostfreier Stahl, Kunststoff.

6. Lagermöbel, umfassend ein Regal nach einem der Ansprüche 1 bis 5.

## Revendications

1. Étagère pour un meuble de rangement comprenant un châssis comprenant une structure d'au moins deux poutres (280), l'étagère comprenant un élément de support (220), et un panneau (210),
dans laquelle le panneau (210) est un panneau à grille comprenant un premier ensemble de tiges (212) qui sont parallèles les unes aux autres, et un second ensemble de tiges (214) qui sont parallèles les unes aux autres, dans laquelle le premier ensemble de tiges (212) est perpendiculaire au second ensemble de tiges (214), dans laquelle les tiges les plus extérieures du second ensemble de tiges forment deux bords opposés (216, 218) de la grille ;
dans laquelle, lorsque l'étagère est en utilisation, l'élément de support (220) est connecté de manière détachable entre les poutres (280) pour supporter le panneau (210), dans laquelle l'élément de support (220) comprend :
un corps allongé (230) pour supporter le panneau (210) ;
un premier élément d'ajustement (240) à une première extrémité du corps allongé (230) configuré pour se fixer de manière détachable au panneau (210) en s'insérant à travers un premier trou (262) du panneau,
un second élément d'ajustement (250) à une seconde extrémité, opposée à la première extrémité, du corps allongé configuré pour se fixer de manière détachable au panneau en s'insérant à travers un second trou (260) du panneau, le second élément d'ajustement comprenant un premier récepteur (252) pour recevoir le second bord (216) du panneau ;
dans laquelle le premier élément d'ajustement comprend un second récepteur (246) pour recevoir le premier bord (218) du panneau et une partie coudée (242) ayant une extension (244) qui s'étend le long d'une direction hors du plan de la grille et l'extension (244) embrasse au moins partiellement un profil de l'une des poutres supportant le panneau lorsqu'en utilisation, dans laquelle la partie coudée, lorsqu'insérée à travers le premier trou, couvre partiellement le premier bord et est ainsi fixée de manière détachable au panneau,
dans laquelle le second élément d'ajustement, en raison d'une certaine flexibilité de l'élément de support et_lorsqu'inséré à travers le second trou, reçoit le second bord de sorte que le second élément d'ajustement est fixé de manière détachable au panneau et l'élément de support est verrouillé avec la grille.

2. Étagère selon la revendication 1, dans laquelle la partie coudée (242) est à une extrémité de l'élément de support.

3. Étagère selon l'une quelconque des revendications 1 à 2, dans laquelle l'élément de support comprend un profil en U vu dans un plan perpendiculaire à l'axe principal de l'élément de support.

4. Étagère selon l'une quelconque des revendications 1 à 3, dans laquelle le premier récepteur (252) ou/et le second récepteur (246) comprend une paroi latérale du profil en U qui s'étend le long d'une direction hors du plan du panneau, de préférence vers le bas lorsqu'en utilisation.

5. Étagère selon l'une quelconque des revendications 1 à 4, dans laquelle au moins une partie de l'élément de support est faite de l'un de : métal galvanisé, métal prégalvanisé, acier inoxydable, plastique.

6. Meuble de rangement comprenant une étagère selon l'une quelconque des revendications 1 à 5.
